# DEMANDE DE BREVET EUROPEEN

(11) **EP 4 685 787 A1**
(43) Date de publication de la demande: **28.01.2026**
(21) Numéro de dépôt: 25186337.9
(22) Date de dépôt: 30.06.2025
(51) Int. Cl.: G10K 11/168, G10K 11/172

(54) **STRUCTURE D'ABSORPTION ACOUSTIQUE COMPRENANT UN SYSTÈME DE CLOISONNEMENT POURVU D'AU MOINS UN PIED**

(30) Priorité: 25.07.2024 FR 2408245
(71) Demandeur: AIRBUS OPERATIONS (S.A.S.), 31060 Toulouse (FR)
(72) Inventeur: GONCALVES, José, 31060 Toulouse (FR)
(74) Mandataire: Fantin, Laurent

(57) **Abrégé**

L'invention a pour objet une structure d'absorption acoustique comportant une structure alvéolaire (32) qui comprend des cellules (40) tubulaires, obturées à chacune de leurs extrémités par une couche acoustiquement résistive (34) et une couche réflectrice (36), ainsi qu'au moins un système de cloisonnement (42) individuel, positionné dans une unique cellule (40) et comprenant :
- une cloison (44) configurée pour séparer la cellule (40) en des premier et deuxième compartiments (40.1, 40.2),
- au moins un orifice (46) traversant la cloison (44),
- plusieurs pieds (48) indépendants du conduit (54), qui présente une première extrémité (48.1) reliée à la cloison (44) et une deuxième extrémité (48.2) en contact contre la couche réflectrice (36),
- au moins un conduit (54) qui présente une première extrémité (54.1) solidaire de la cloison (44) entourant l'orifice (46) ainsi qu'une deuxième extrémité (54.2) espacée de la couche réflectrice (36).

## Description

La présente demande se rapporte à une structure d'absorption acoustique comprenant un système de cloisonnement pourvu d'au moins un pied ainsi qu'à un aéronef comportant au moins une telle structure d'absorption acoustique.

Selon une configuration, un ensemble de propulsion d'aéronef comprend un conduit d'éjection primaire, par lequel sont évacués les gaz brûlés issus de la combustion, qui comporte une structure d'absorption acoustique pour atténuer le bruit sur plusieurs bandes de fréquences, comme les bruits liés à la combustion (300-1000Hz) et les bruits liés au fonctionnement de turbines (supérieurs ou égaux à 4000Hz).

Selon un premier mode de réalisation de l'art antérieur, une structure d'absorption acoustique comprend une structure alvéolaire positionnée entre une couche acoustiquement résistive (poreuse) en contact avec un milieu dans lequel se propagent des ondes acoustiques et une couche réflectrice (imperméable). La structure alvéolaire comprend une multitude de cellules tubulaires chacune fermée à une première extrémité par la couche acoustiquement résistive et à une deuxième extrémité par la couche réflective. Ces cellules ne sont pas compartimentées et sont configurées pour cibler généralement une seule fréquence de résonance en fonction de la hauteur des cellules. Ce premier mode de réalisation permet d'obtenir un résonateur % d'onde adapté pour atténuer des ondes sonores avec des fréquences élevées.

Ce premier mode de réalisation n'est pas pleinement satisfaisant car il ne permet de traiter qu'une faible plage de fréquences.

Selon un deuxième mode de réalisation de l'art antérieur, une structure d'absorption acoustique comprend des première et deuxième structures alvéolaires superposées, positionnées entre une couche acoustiquement résistive en contact avec un milieu dans lequel se propagent des ondes acoustiques et une couche réflectrice. Cette structure d'absorption acoustique comprend une cloison poreuse acoustiquement résistive intercalée entre les première et deuxième structures alvéolaires, la première structure alvéolaire étant intercalée entre la couche acoustiquement résistive et la cloison poreuse acoustiquement résistive, la deuxième structure alvéolaire étant intercalée entre la couche réflectrice et la cloison poreuse acoustiquement résistive.

Ce deuxième mode de réalisation permet d'obtenir deux types de résonateurs, un premier résonateur de type % d'ondes au niveau des cellules de la première structure alvéolaire, adapté pour atténuer les ondes sonores hautes fréquences, ainsi qu'un deuxième résonateur de type Helmholtz au niveau des cellules de la deuxième structure alvéolaire, adapté pour atténuer les ondes sonores basses fréquences.

Même si ce deuxième mode de réalisation permet d'élargir la plage des fréquences des ondes acoustiques traitées, il n'est pas pleinement satisfaisant car, lorsque la structure d'absorption acoustique est courbe, il est difficile d'aligner chacune des cellules de la première structure alvéolaire avec une seule cellule de la deuxième structure alvéolaire.

La présente invention vise à remédier à tout ou partie des inconvénients de l'art antérieur.

A cet effet, l'invention a pour objet une structure d'absorption acoustique comportant une couche acoustiquement résistive, une couche réflectrice ainsi qu'une structure alvéolaire intercalée entre la couche acoustiquement résistive et la couche réflectrice, ladite structure alvéolaire comportant des parois qui délimitent des cellules tubulaires, obturées à chacune de leurs extrémités par la couche acoustiquement résistive et la couche réflectrice, ladite structure alvéolaire comportant également au moins un système de cloisonnement.

Selon l'invention, le système de cloisonnement est individuel, positionné dans une unique cellule et comprend :
- une cloison configurée pour séparer la cellule en des premier et deuxième compartiments, présentant un bord périphérique en contact de manière étanche avec la (ou les) paroi(s) délimitant la cellule dans laquelle est positionnée la cloison,
- au moins un orifice traversant la cloison et faisant communiquer les premier et deuxième compartiments,
- plusieurs pieds indépendants du conduit, qui présentent chacun une première extrémité reliée directement à la cloison et une deuxième extrémité en contact contre la couche réflectrice,
- au moins un conduit qui présente une première extrémité solidaire de la cloison entourant l'orifice ainsi qu'une deuxième extrémité distante de la cloison et espacée de la couche réflectrice.

Contrairement à l'art antérieur qui prévoit des premier et deuxième compartiments positionnés dans des structures alvéolaires différentes et par conséquent difficiles à aligner, selon l'invention, les premier et deuxième compartiments sont situés dans la même structure alvéolaire et sont par conséquent automatiquement alignés même lorsque la structure d'absorption acoustique est courbe. Enfin, la présence de pieds permet de garantir le positionnement de la cloison à une position déterminée en fonction de la plage de fréquences des ondes acoustiques à atténuer.

Selon une autre caractéristique, la cloison et le conduit sont reliés par une zone de jonction en forme d'entonnoir.

Selon une autre caractéristique, l'orifice et le conduit sont centrés par rapport au bord périphérique de la cloison.

Selon une autre caractéristique, les deuxièmes extrémités des pieds sont évasées par rapport aux premières extrémités.

Selon une autre caractéristique, la cloison comprend une partie centrale rigide ainsi qu'une partie périphérique souple apte à se déformer afin d'épouser les formes de la (ou des) paroi(s) délimitant la cellule dans laquelle est positionnée la cloison.

Selon une autre caractéristique, la partie centrale de la cloison, le (ou les) pied(s) et le conduit sont réalisés d'un seul tenant, en un même matériau rigide.

Selon une autre caractéristique, la structure d'absorption acoustique comprend un film de colle reliant la deuxième extrémité de chaque pied et la couche réflectrice.

L'invention a également pour objet un aéronef comprenant au moins une structure d'absorption acoustique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est coupe longitudinale d'une partie d'un ensemble de propulsion,
- La figure 3 est une coupe longitudinale d'une structure d'absorption acoustique illustrant un mode de réalisation de l'invention,
- La figure 4 est une coupe d'une cellule d'une structure d'absorption acoustique illustrant un mode de réalisation,
- La figure 5 est une vue en perspective d'un système de cloisonnement illustrant un mode de réalisation,
- La figure 6 est une vue en perspective d'un système de cloisonnement illustrant un autre mode de réalisation,
- La figure 7 est une vue en perspective d'un système de cloisonnement illustrant un autre mode de réalisation de l'invention,
- La figure 8 est une coupe longitudinale d'une structure d'absorption acoustique comportant au moins un système de cloisonnement comme illustré sur la figure 6,
- La figure 9 est une coupe longitudinale d'une structure d'absorption acoustique comportant au moins un système de cloisonnement comme illustré sur la figure 7.

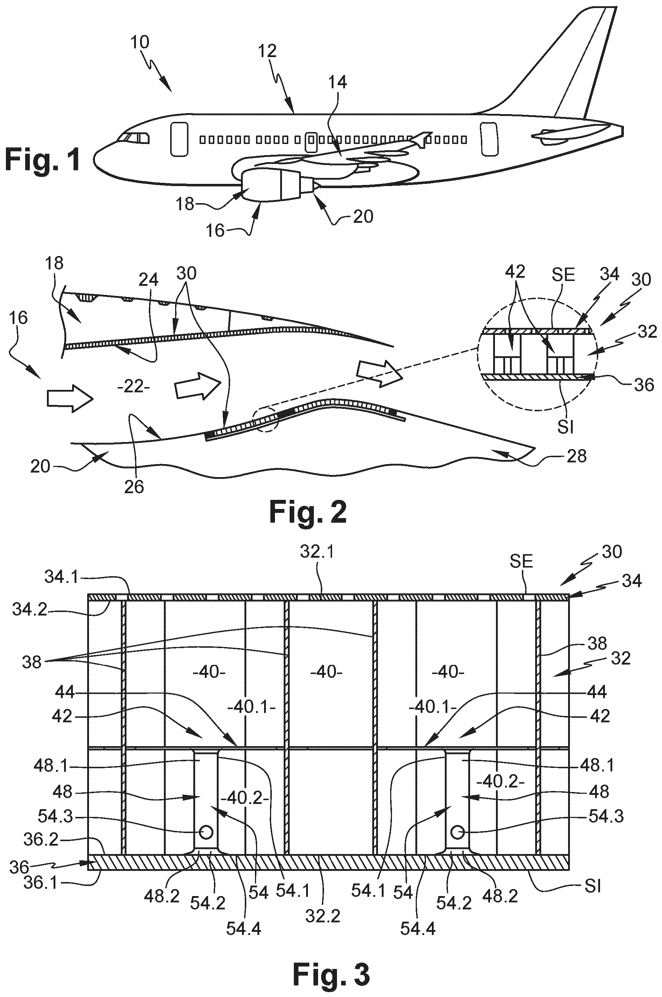

Selon un mode de réalisation visible la figure 1, un aéronef 10 comporte un fuselage 12, deux ailes 14, disposées de part et d'autre du fuselage 12, et des ensembles de propulsion 16 fixés sous les ailes 14. Chaque ensemble de propulsion 16 comprend une nacelle 18 et une turbomachine 20 positionnée à l'intérieur de la nacelle 18.

Selon un mode de réalisation visible sur la figure 2, la turbomachine 20 comprend, à l'arrière, un conduit d'éjection primaire 22, via lequel s'échappent des gaz brûlés sortant de la turbomachine 20, qui est délimité à l'extérieur par une paroi extérieure 24 et à l'intérieur par une paroi intérieure 26 prolongée par un cône de tuyère 28.

Selon une configuration, les parois extérieure et intérieure 24, 26 comprennent chacune au moins une structure d'absorption acoustique 30.

Chaque structure d'absorption acoustique 30 comprend une surface extérieure SE en contact avec un milieu dans lequel se propagent des ondes acoustiques et une surface intérieure SI opposée à la surface extérieure SE.

Bien que décrite appliquée à un conduit d'éjection primaire 22, l'invention n'est pas limitée à cette application. Ainsi, la structure d'absorption acoustique 30 peut être positionnée au niveau de toute paroi qui présente une surface extérieure SE en contact avec un milieu dans lequel se propagent des ondes sonores.

Selon différents modes de réalisation visibles sur les figures 2, 3, 8 et 9, une structure d'absorption acoustique 30 comprend une structure alvéolaire 32 intercalée entre une couche acoustiquement résistive 34 perméable aux ondes sonores et une couche réflectrice 36 imperméable aux ondes sonores. La couche acoustiquement résistive 34 présente une première face 34.1 correspondant à la surface extérieure SE et une deuxième face 34.2 orientée vers la structure alvéolaire 32 et reliée à cette dernière. La couche réflectrice 36 présente une première face 36.1 correspondant à la surface intérieure SI et une deuxième face 36.2 orientée vers la structure alvéolaire 32 et reliée à cette dernière.

La couche acoustiquement résistive 34, la couche réflectrice 36, la liaison entre la couche acoustiquement résistive 34 et la structure alvéolaire 32 ainsi que la liaison entre la couche réflectrice 36 et la structure alvéolaire 32 ne sont pas plus décrites car elles peuvent être identiques à celles de l'art antérieur.

La structure alvéolaire 32 s'étend entre une première face 32.1 en contact avec la couche acoustiquement résistive 34 et une deuxième face 32.2 en contact avec la couche réflectrice 36 et comprend une multitude de parois 38 qui présentent chacune des premiers et deuxièmes bords positionnés respectivement au niveau des première et deuxième faces 32.1, 32.2. Ces parois 38 sont configurées pour délimiter des cellules 40 tubulaires qui débouchent chacune au niveau des première et deuxième faces 32.1, 32.2. Chaque cellule 40 est obturée à chacune de ses extrémités par la couche acoustiquement résistive 34 et la couche réflectrice 36.

Selon un mode de réalisation, les parois 38 sont parallèles à une direction longitudinale sensiblement perpendiculaire à la couche acoustiquement résistive 34 et/ou la couche réflectrice 36. Selon une configuration, les parois 38 sont sensiblement rectangulaires. Chaque cellule 40 est délimitée par six parois 38 et présente une section hexagonale. Bien entendu, l'invention n'est pas limitée à cette configuration. En variante, chaque paroi 38 pourrait être cylindrique et délimiter une seule cellule 40 de section circulaire.

La structure alvéolaire 32 comprend au moins un système de cloisonnement 42 individuel, positionné dans une unique cellule 40 et configuré pour la séparer en des premier et deuxième compartiments 40.1, 40.2. En présence de plusieurs systèmes de cloisonnement 42, chacun d'eux est positionné dans une seule cellule 40.

Selon une configuration, toutes les cellules 40 de la structure alvéolaire 32 comprennent chacune un système de cloisonnement 42.

Selon une autre configuration, les cellules 40 d'une zone de la structure alvéolaire 32 comprennent chacune un système de cloisonnement 42.

Selon d'autres configurations, seules certaines cellules 40 d'au moins une zone de la structure alvéolaire 32 comprennent chacune un système de cloisonnement 42.

Contrairement à l'art antérieur pour lequel le système de cloisonnement, à savoir la cloison poreuse acoustiquement résistive, est prévu pour plusieurs cellules, intercalé entre deux structures alvéolaires et sépare des premier et deuxième compartiments, positionnés respectivement dans les première et deuxième structures alvéolaires, qui sont difficiles à faire coïncider, l'invention prévoit un système de cloisonnement 42 individuel, positionné dans une unique structure alvéolaire 32, isolant des premier et deuxième compartiments 40.1, 40.2 prévus dans la même cellule 40. Par conséquent, les premier et deuxième compartiments sont automatiquement dans le prolongement l'un de l'autre et la difficulté à positionner deux structures alvéolaires l'une par rapport à l'autre de manière à faire coïncider des premiers et deuxièmes compartiments positionnés dans des structures alvéolaires différentes accolées l'une contre l'autre ne se pose plus.

Selon un mode de réalisation, chaque système de cloisonnement 42 positionné dans une cellule 40 comprend une cloison 44 configurée pour séparer la cellule 40 en des premier et deuxième compartiments 40.1, 40.2, au moins un orifice 46 traversant la cloison 44 et faisant communiquer les premier et deuxième compartiments 40.1, 40.2 ainsi qu'au moins un pied 48 qui présente une première extrémité 48.1 reliée directement ou indirectement à la cloison 44 et une deuxième extrémité 48.2 en contact contre la couche réflectrice 36.

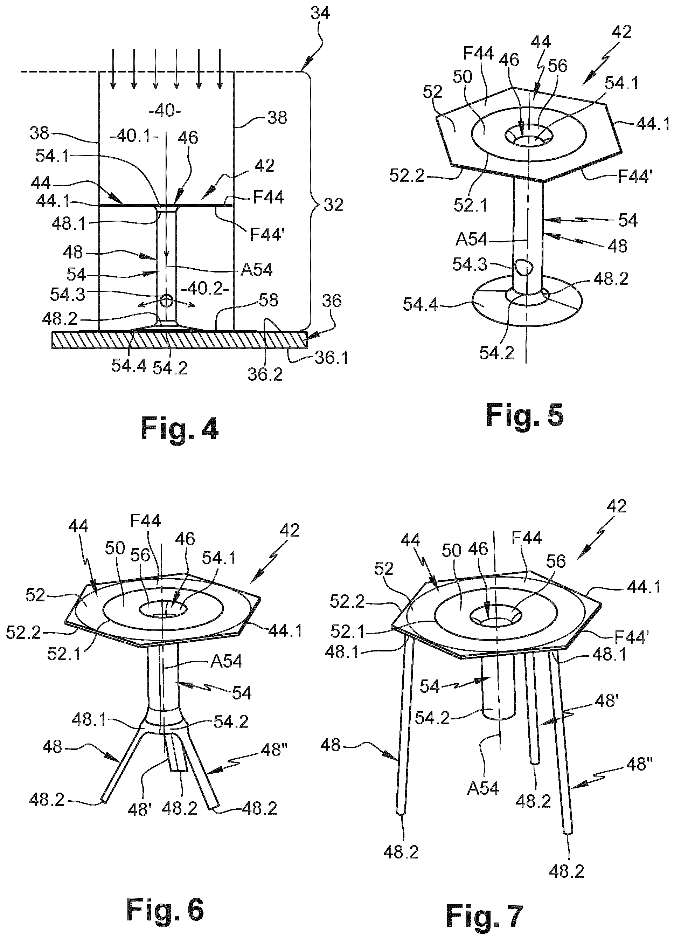

Chaque cloison 44 présente une première face F44 orientée vers la couche acoustiquement résistive 34 ainsi qu'une deuxième face F44' orientée vers la couche réflectrice 36. La cloison 44 est espacée de la couche acoustiquement résistive 34 et de la couche réflectrice 36, le premier compartiment 40.1 étant positionné entre la couche acoustiquement résistive 34 et la cloison 44, le deuxième compartiment 40.2 étant positionné entre la couche réflectrice 36 et la cloison 44. Selon un agencement, la cloison 44 est positionnée dans un plan sensiblement parallèle à la couche acoustiquement résistive 34 et/ou à la couche réflectrice 36. Selon une configuration visible sur la figure 4, la cloison 44 est située sensiblement à équidistance de la couche acoustiquement résistive 34 et de la couche réflectrice 36. Selon d'autres configurations visibles sur les figures 3, 8 et 9, la cloison 44 est plus proche de la couche réflectrice 36 que de la couche acoustiquement résistive 34. La cloison 44 est séparée de la couche réflectrice 36 ou de la couche acoustiquement résistive 34 d'une distance qui est ajustée en fonction des fréquences des ondes acoustiques que l'on cherche à atténuer. Chaque cloison 44 présente un bord périphérique 44.1 en contact de manière étanche avec la (ou les) paroi(s) 38 délimitant la cellule 40 dans laquelle est positionnée la cloison 44. Ainsi, la cloison comprend une section délimitée par le bord périphérique 44.1 supérieure ou égale à la section de la cellule 40 dans laquelle est positionnée la cloison 44.

Selon une configuration, la cloison 44 comprend une partie centrale 50 rigide et une partie périphérique 52 souple apte à se déformer afin d'épouser les formes de la (ou des) paroi(s) 38 délimitant la cellule 40 dans laquelle est positionnée la cloison 44. Ainsi, la cloison 44 peut s'adapter à différentes sections de cellule 40.

La partie centrale 50 peut être métallique ou en matériau composite rigide. La partie périphérique 52 peut être réalisée en matériau élastomère.

Selon un mode de réalisation, la partie centrale 50 est un disque et présente un bord périphérique circulaire. La partie périphérique 52 présente un bord intérieur 52.1 circulaire, relié à la partie centrale 50, ainsi qu'un bord extérieur 52.2 (correspondant au bord périphérique 44.1 de la cloison 44) qui présente une forme sensiblement identique à la section de la cellule 40. Dans le cas d'une cellule 40 de section hexagonale, le bord extérieur 52.2 est hexagonal.

Selon un mode de réalisation, la cloison 44 comprend un unique orifice 46 sensiblement centré par rapport au bord périphérique 44.1 de la cloison 44. A titre d'exemple, l'orifice 46 présente une section de passage inférieure à 10% de la section de la cellule 40. Ce pourcentage est fonction des caractéristiques recherchées pour le résonateur.

Selon un mode de réalisation, le système de cloisonnement 42 comprend au moins un conduit 54 situé dans le prolongement de l'orifice 46 en saillie par rapport à la deuxième face F44' de la cloison 44. Dans le cas d'un unique orifice 46 centré, le système de cloisonnement 42 comprend un unique conduit 54 centré par rapport au bord périphérique 44.1 de la cloison 44.

Selon une configuration, le conduit 54 présente une première extrémité 54.1 solidaire de la cloison 44 entourant l'orifice 46 ainsi qu'une deuxième extrémité 54.2 distante de la cloison 44. Selon un agencement, la cloison 44 et le conduit 54 sont reliés par une zone de jonction 56 qui présente une forme en entonnoir et une section qui se réduit de la première face F44 de la cloison 44 jusqu'au conduit 54.

Selon un agencement, le conduit 54 est cylindrique et présente un axe A54 sensiblement perpendiculaire à la cloison 44.

Selon un mode de réalisation, la cloison 44, plus particulièrement sa partie centrale 50, le (ou les) pied(s) 48 et le conduit 54 sont réalisés d'un seul tenant, en un même matériau rigide (métallique, plastique ou en matériau composite sans que cette liste ne soit limitative). Selon un premier mode de réalisation visible sur les figures 3 à 5, la deuxième extrémité 54.2 du conduit 54 est en contact avec la couche réflectrice 36. Selon ce premier mode de réalisation, le conduit 54 et le pied 48 sont confondus. Selon ce premier mode de réalisation, le conduit 54 présente au moins un trou 54.3 faisant communiquer l'intérieur et l'extérieur du conduit 54 distant des première et deuxième extrémités 54.1, 54.2. Ainsi le conduit 54 est un trou d'évacuation des ondes sonores présentes dans le premier compartiment 40.1 vers le deuxième compartiment 40.2.

Pour améliorer la stabilité du système de cloisonnement 42, le conduit 54 comprend une collerette 54.4 située au niveau de la deuxième extrémité 54.2 qui s'étend dans un plan sensiblement perpendiculaire à l'axe A54 du conduit 54, plaquée contre la couche réflectrice 36.

Selon d'autres modes de réalisation visibles sur les figures 6 à 9, la deuxième extrémité 54.2 du conduit 54 est espacée de la couche réflectrice 36. Selon ces modes de réalisation, la deuxième extrémité 54.2 est débouchante et permet de faire communiquer l'intérieur et l'extérieur du conduit 54.

Selon un mode de réalisation, le système de cloisonnement 42 comprend plusieurs pieds 48, notamment trois pieds 48, 48', 48" régulièrement répartis.

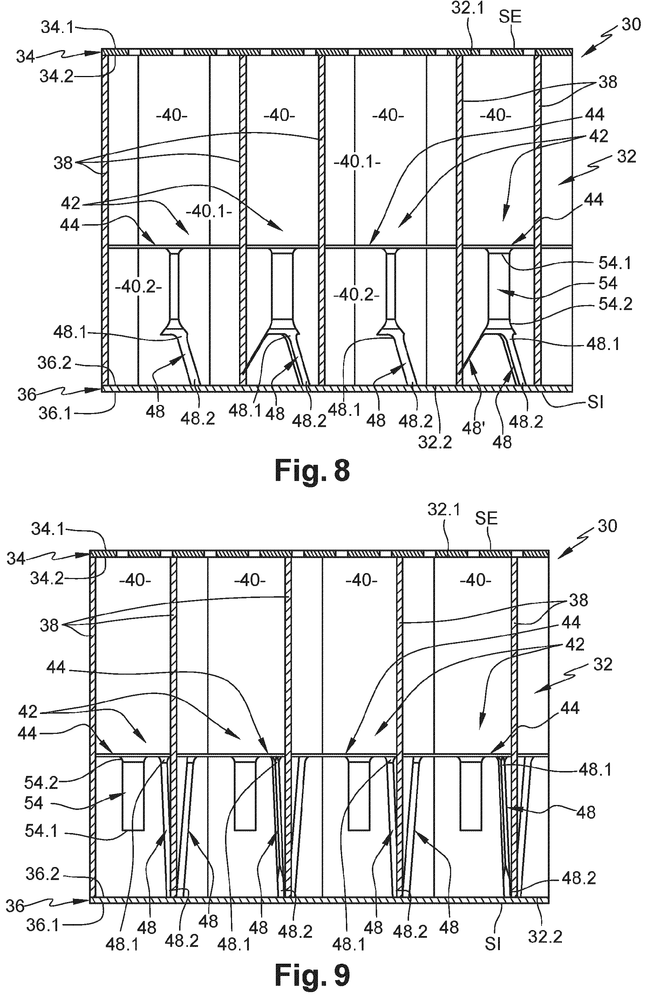

Selon un mode de réalisation visible sur les figures 7 et 9, les pieds 48, 48', 48' sont indépendants du conduit 54. Dans ce cas, les premières extrémités 48.1 des pieds 48, 48', 48" sont reliées directement à la cloison 44.

Selon un autre mode de réalisation visible sur les figures 6 et 8, le conduit 54 est espacé de la couche réflectrice 36. Dans ce cas, les premières extrémités 48.1 des pieds 48, 48', 48" sont reliées à la deuxième extrémité 54.2 du conduit 54. Selon une configuration, les deuxièmes extrémités 48.2 des pieds 48, 48', 48" sont évasées par rapport aux premières extrémités 48.1. Selon un mode de réalisation, la deuxième extrémité 48.2 d'au moins un pied 48, 48', 48" est reliée par collage à la couche réflectrice 36. Selon une configuration, la structure d'absorption acoustique 30 comprend un film de colle 58 solidaire de la deuxième face 36.2 de la couche réflectrice 36 reliant la deuxième extrémité 48.2 de chaque pied 48, 48', 48" et la couche réflectrice 36.

Selon un mode opératoire, un procédé de fabrication d'une structure d'absorption acoustique comprend une première étape d'assemblage de la structure alvéolaire 32 et de la couche réflectrice 36, une étape de mise en place de chacun des systèmes de cloisonnement 42 dans une cellule 40 de la structure alvéolaire 32, une deuxième étape d'assemblage de la couche acoustiquement résistive 34 et de la structure alvéolaire 32. La structure alvéolaire 32 peut être courbée avant la première étape d'assemblage, après cette première étape d'assemblage et avant l'étape de mise en place des systèmes de cloisonnement 42, après cette dernière mais avant la deuxième étape d'assemblage ou après la deuxième étape d'assemblage. Quel que soit le mode de réalisation, les ondes acoustiques traversent la couche acoustiquement résistive 34 et pénètrent dans le premier compartiment 40.1 qui forme un premier résonateur de type % d'ondes adapté pour atténuer les ondes sonores hautes fréquences. Certaines ondes traversent la cloison 44 via l'orifice 46, cheminent dans le conduit 54 puis sortent de ce dernier via sa deuxième extrémité 54.2 débouchante ou son trou 54.3 pour pénétrer dans le deuxième compartiment 40.2 qui forme un deuxième résonateur de type Helmholtz adapté pour atténuer les ondes sonores basses fréquences.

## Revendications

1. Structure d'absorption acoustique comportant une couche acoustiquement résistive (34), une couche réflectrice (36) ainsi qu'une structure alvéolaire (32) intercalée entre la couche acoustiquement résistive (34) et la couche réflectrice (36), ladite structure alvéolaire (32) comportant des parois (38) qui délimitent des cellules (40) tubulaires, obturées à chacune de leurs extrémités par la couche acoustiquement résistive (34) et la couche réflectrice (36), ladite structure alvéolaire (32) comportant également au moins un système de cloisonnement (42) ; **caractérisée en ce que** le système de cloisonnement (42) est individuel, positionné dans une unique cellule (40) et comprend :
- une cloison (44) configurée pour séparer la cellule (40) en des premier et deuxième compartiments (40.1, 40.2), présentant un bord périphérique (44.1) en contact de manière étanche avec la (ou les) paroi(s) (38) délimitant la cellule (40) dans laquelle est positionnée la cloison (44),
- au moins un orifice (46) traversant la cloison (44) et faisant communiquer les premier et deuxième compartiments (40.1, 40.2),
- plusieurs pieds (48, 48', 48") indépendants du conduit (54), qui présentent chacun une première extrémité (48.1) reliée directement à la cloison (44) et une deuxième extrémité (48.2) en contact contre la couche réflectrice (36),
- au moins un conduit (54) qui présente une première extrémité (54.1) solidaire de la cloison (44) entourant l'orifice (46) ainsi qu'une deuxième extrémité (54.2) distante de la cloison (44) et espacée de la couche réflectrice (36).

2. Structure d'absorption acoustique selon la revendication précédente, **caractérisée en ce que** la cloison (44) et le conduit (54) sont reliés par une zone de jonction (56) en forme d'entonnoir.

3. Structure d'absorption acoustique selon l'une des revendications précédentes, **caractérisée en ce que** l'orifice (46) et le conduit (54) sont centrés par rapport au bord périphérique (44.1) de la cloison (44).

4. Structure d'absorption acoustique selon les revendications précédentes, **caractérisée en ce que** les deuxièmes extrémités (48.2) des pieds (48, 48', 48") sont évasées par rapport aux premières extrémités (48.1).

5. Structure d'absorption acoustique selon l'une des revendications précédentes, **caractérisée en ce que** la cloison (44) comprend une partie centrale (50) rigide ainsi qu'une partie périphérique (52) souple apte à se déformer afin d'épouser les formes de la (ou des) paroi(s) (38) délimitant la cellule (40) dans laquelle est positionnée la cloison (44).

6. Structure d'absorption acoustique selon la revendication précédente, **caractérisée en ce que** la partie centrale (50) de la cloison (44), le (ou les) pied(s) (48) et le conduit (54) sont réalisés d'un seul tenant, en un même matériau rigide.

7. Structure d'absorption acoustique selon l'une des revendications précédentes, **caractérisée en ce que** la structure d'absorption acoustique (30) comprend un film de colle (58) reliant la deuxième extrémité (48.2) de chaque pied (48, 48', 48") et la couche réflectrice (36).

8. Aéronef comprenant au moins une structure d'absorption acoustique selon l'une des revendications précédentes.
